# FASCICULE DE BREVET EUROPEEN

(11) **EP 3 017 567 B1**
(45) Date de publication et mention de la délivrance du brevet: **30.11.2022**
(21) Numéro de dépôt: 14749893.5
(22) Date de dépôt: 26.06.2014
(51) Int. Cl.: H04L 41/12, H04L 41/40, H04W 24/02

(54) **DISPOSITIF DE CONTRÔLE D'UN COEUR DE RÉSEAU IP ET PROCÉDÉ DE COMMANDE MIS EN OEUVRE PAR CE DISPOSITIF**
VORRICHTUNG ZUR STEUERUNG EINES IP-KERNNETZWERKS UND DURCH DIESE VORRICHTUNG IMPLEMENTIERTES STEUERUNGSVERFAHREN
DEVICE FOR CONTROLLING AN IP CORE NETWORK AND CONTROL METHOD IMPLEMENTED BY THIS DEVICE

(30) Priorité: 02.07.2013 FR 1356435
(43) Date de publication de la demande: 11.05.2016
(73) Titulaire: Orange, 92130 Issy-les-Moulineaux (FR)
(72) Inventeur: SHANMUGALINGAM, Sivasothy, F-35000 Rennes (FR); BERTIN, Philippe, F-35690 Acigne (FR)
(74) Mandataire: Cabinet Beau de Loménie
(86) Numéro de dépôt international: PCT/FR2014/051630
(87) Numéro de publication internationale: WO 2015/001232

(56) Documents cités:
- US-A1- 2012 300 615
- X Jin, L Erran Li, L Vanbever, J Rexford: "SoftCell: Taking Control of Cellular Core Networks", , 15 mai 2013 (2013-05-15), pages 1-14, XP002719715, Cornell University Librabry Extrait de l'Internet: URL:http://arxiv.org/pdf/1305.3568v1.pdf [extrait le 2014-02-04]
- KOSTAS PENTIKOUSIS ET AL: "Mobileflow: Toward software-defined mobile networks", IEEE COMMUNICATIONS MAGAZINE, IEEE SERVICE CENTER, PISCATAWAY, US, vol. 51, no. 7, 1 juillet 2013 (2013-07-01), XP011519224, ISSN: 0163-6804, DOI: 10.1109/MCOM.2013.6553677
- GEORG HAMPEL ET AL: "Applying Software-Defined Networking to the telecom domain", COMPUTER COMMUNICATIONS WORKSHOPS (INFOCOM WKSHPS), 2013 IEEE CONFERENCE ON, IEEE, 14 avril 2013 (2013-04-14), pages 133-138, XP032436447, DOI: 10.1109/INFCOMW.2013.6562893 ISBN: 978-1-4799-0055-8
- HIDEYUKI SHIMONISHI ET AL: "Virtualized network infrastructure using OpenFlow", NETWORK OPERATIONS AND MANAGEMENT SYMPOSIUM WORKSHOPS (NOMS WKSPS), 2010 IEEE/IFIP, IEEE, PISCATAWAY, NJ, USA, 19 avril 2010 (2010-04-19), pages 74-79, XP031690721, ISBN: 978-1-4244-6037-3
- "3rd Generation Partnership Project; Technical Specification Group Services and System Aspects; General Packet Radio Service (GPRS) enhancements for Evolved Universal Terrestrial Radio Access Network (E-UTRAN) access (Release 12)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 5 March 2013 (2013-03-05), pages 1-290, XP050691826, [retrieved on 2013-03-05]

## Description

### Arrière-plan de l'invention

L'invention se rapporte au domaine général des télécommunications et concerne plus particulièrement une architecture de cœur de réseau IP (Internet Protocol). L'invention s'applique ainsi de façon privilégiée mais non limitative aux réseaux de communication conformes à la norme LTE (Long Term Evolution) définie par le consortium de standardisation 3GPP (Third Generation Partnership Project), et plus spécifiquement à l'architecture d'un cœur de réseau LTE/EPC (Evolved Packet Core).

Une augmentation exponentielle du trafic des télécommunications mobiles est attendue dans les prochaines années, dynamisée par l'apparition de nouvelles applications, de nouveaux terminaux et de débits de communication de plus en plus élevés.

Dans ce contexte, l'architecture LTE/EPC a été définie par le consortium 3GPP pour fournir une connectivité IP transparente entre un terminal d'un utilisateur, autrement désigné par équipement utilisateur (ou UE pour « User Equipment »), et des réseaux de paquets de données (ou PDNs pour « Packet Data Networks ») aptes à offrir à ce terminal divers services de communication, tels que des services de voix sur IP ou VoIP (Voice over IP), de téléchargements de données, de vidéos à la demande, etc. Cette architecture repose sur :
- un réseau d'accès (ou E-UTRAN pour « Evolved-Universal Terrestrial Radio Access Network ») auquel est connecté le terminal de l'utilisateur via une station de base désignée par « eNodeB » (eNB) ; et
- un cœur de réseau IP (ou EPC) gérant les échanges de données, en liaisons montante et descendante, entre ce terminal et les réseaux de paquets de données reliés au cœur de réseau.

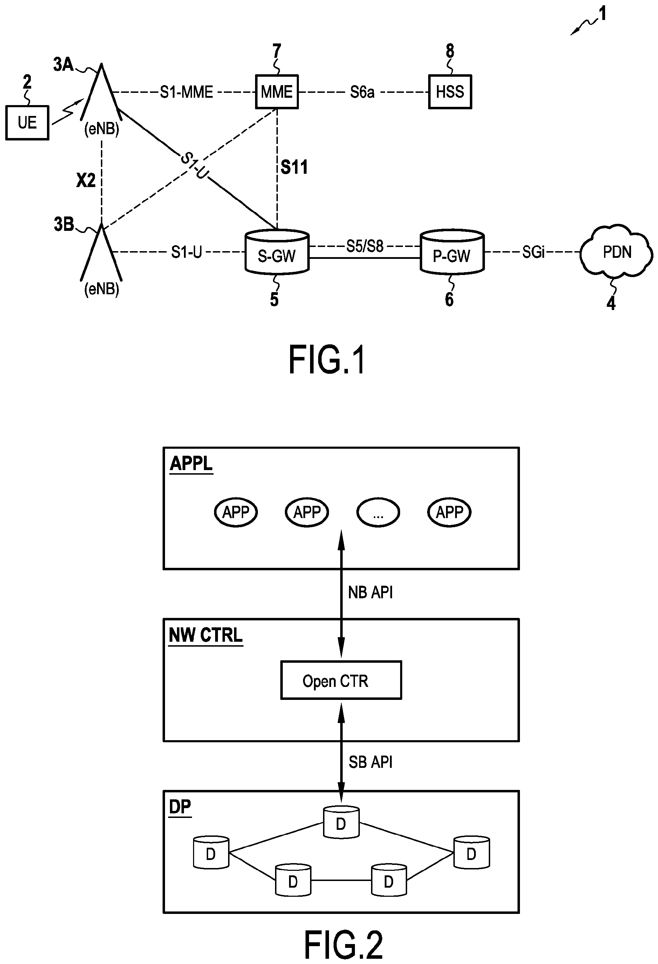

La **figure 1** représente schématiquement les différents équipements de réseau sur lesquels s'appuie l'architecture LTE/EPC, dans sa définition actuelle par le consortium 3GPP telle que décrite notamment dans le document 3GPP TS 23.401 intitulé « Technical Specification Group Services and System aspects ; General Packet Radio Service (GPRS) enhancements for Evolved Universal Terrestrial Radio Access Network (E-UTRAN) Access », Release 12, mars 2013. A titre indicatif, les échanges prévus entre ces équipements pour le transfert des données (i.e. dans le plan de données ou plan utilisateur) sont modélisés par des traits pleins, tandis que les échanges de signalisation prévus entre ces équipements pour supporter ces transferts de données (i.e. dans le plan de contrôle ou de signalisation) sont modélisés par des traits discontinus.

Plus précisément sur la figure 1, le cœur de réseau EPC 1 permet à un terminal utilisateur UE 2, rattaché à (i.e. servi par) une station de base eNB 3A d'un réseau d'accès tel qu'un réseau de télécommunications mobiles, d'accéder à des services offerts par un réseau de paquets de données externe PDN 4. A cet effet, le cœur de réseau EPC 1 comprend quatre types d'équipements, à savoir :
- une passerelle de transfert de données 5, autrement appelée passerelle S-GW (pour « Serving GateWay »), située entre le réseau d'accès et le cœur de réseau 1 ;
- une passerelle d'interconnexion 6, autrement appelée passerelle P-GW (pour « PDN GateWay »), permettant de connecter le cœur de réseau 1 au réseau externe 4 de paquets de données ;
- un équipement 7 de gestion de mobilité des terminaux, autrement désigné par équipement MME (pour « Mobility Management Entity »), en charge d'assurer la connectivité IP des terminaux lorsque ceux-ci sont en situation de mobilité ; et
- une base de données utilisateurs 8, autrement appelée serveur d'abonnés du réseau HSS (pour « Home Subscriber Server »).

Les stations de base 3A et 3B sont connectées directement à l'équipement MME 7 et à la passerelle de transfert de données S-GW 5 par l'intermédiaire d'interfaces S1-MME et S1-U respectivement.

L'équipement MME 7 gère la mobilité et la connectivité IP du terminal 2 (i.e. sa connectivité réseau). Elle est responsable de son authentification (en vue de l'autoriser à accéder au cœur de réseau 1), et gère l'établissement de sessions de communication pour ce terminal ainsi que la mobilité intra-3GPP.

Les passerelles S-GW 5 et P-GW 6 sont responsables du transfert des données au sein du cœur de réseau 1, de la gestion de la mobilité et du contrôle de la qualité de service dans le plan de données.

L'équipement MME 7 est connecté à la passerelle de transfert de données S-GW 5 par l'intermédiaire d'une interface logique S11. La passerelle de transfert de données S-GW 5 est connectée à la passerelle d'interconnexion P-GW 6 par l'intermédiaire d'une interface S5.

L'architecture LTE/EPC telle qu'elle est actuellement définie par le consortium 3GPP n'est pas réellement optimisée et rend difficile l'intégration de nouveaux services par les opérateurs des cœurs de réseau IP.

Plus précisément, cette architecture s'appuie aujourd'hui sur le protocole GTP (GPRS Tunneling Protocol) pour gérer la mobilité des terminaux au sein du réseau. Ce protocole comporte plusieurs composantes, dont :
- le protocole GTP-U, utilisé pour le transfert (échange) de données utilisateur entre deux tunnels de communication séparés, afin de gérer les situations de mobilité du terminal utilisateur sur les interfaces S1 et S5 ; et
- le protocole GTP-C utilisé pour établir, mettre à jour et maintenir les tunnels de communication GTP. Les échanges de signalisation sur les interfaces S11 et S5 s'appuient ainsi sur le protocole GTP-C.

Il convient de noter que des tunnels de communication GTP distincts sont établis pour les différents types de trafic échangés dans le réseau (i.e. pour chaque qualité de service), et plus spécifiquement, pour chaque session de communication PDP (Packet Data Protocol) gérée par le cœur de réseau. Le protocole de communication GTP contribue donc non seulement à la gestion de la mobilité des terminaux mais également à la gestion de la qualité de service dans le réseau.

Le protocole GTP est utilisé au-dessus du protocole de transport implémenté dans le réseau, c'est-à-dire typiquement au-dessus du protocole UDP (User Data Protocol) ou éventuellement du protocole TCP (Transmission Control Protocol), qui s'exécute lui-même au-dessus du protocole IP (Internet Protocol). L'utilisation du protocole GTP résulte donc en l'ajout de plusieurs entêtes (i.e. entêtes GTP, UDP/TCP et IP) à chaque paquet de données transitant par le cœur de réseau, ce qui accroit significativement la quantité de signalisation échangée entre les différents équipements du réseau pour gérer la mobilité des terminaux et la qualité de service des communications.

Par ailleurs, les passerelles P-GW d'interconnexion avec les réseaux de paquets externes et les passerelles S-GW de transfert de données telles qu'elles sont prévues aujourd'hui dans l'architecture LTE/EPC sont figées et généralement programmées sur des équipements « hardware » spécialisés. Ce choix d'implémentation offre peu de flexibilité en matière de réutilisation et/ou de réorganisation des ressources.

Ces deux exemples illustrent bien les limites de l'architecture LTE/EPC actuelle concernant l'intégration de nouveaux services.

Les documents US2012/300615 et celui de J. Kempf et al. intitulé « Moving the Mobile Evolved Packet Core to the Cloud », 5th International Workshop on Selected Topics in Mobile and Wireless Computing, 2012, proposent une évolution de l'architecture de cœur de réseau LTE/EPC définie par le consortium 3GPP dans laquelle les plans de données et de contrôle sont séparés, et qui utilise le principe de réseau défini par logiciel communément désigné par SDN pour « Software Defined Networking ». De façon connue, une architecture de réseau SDN permet de découpler les plans de contrôle et de données en centralisant l'intelligence du réseau (c'est-à-dire les fonctions de contrôle du réseau) au niveau d'un dispositif de contrôle logiciel. Le comportement des équipements du réseau est alors défini par des règles reçues du dispositif de contrôle, telles que des règles de traitement ou de transfert des données (i.e. du trafic). Le concept SDN s'appuie sur le protocole de communication OpenFlow^{™} défini par l'ONF (Open Networking Foundation), qui permet une programmation simplifiée, via une interface standard, des équipements du réseau.

Plus spécifiquement, le document de J. Kempf et al. propose de déplacer les fonctions actuelles de l'équipement MME, ainsi que le plan de contrôle des passerelles de transfert de données S-GW et de la passerelle d'interconnexion P-GW, dans des applications s'exécutant au-dessus d'un dispositif de contrôle implémenté par une machine virtuelle dans un centre de données externe, aussi connu sous l'appellation de nuage informatique ou de « cloud » en anglais. Ces applications interagissent avec le dispositif de contrôle logiciel par le biais d'interfaces de programmation ou API (Application Programming Interfaces). Les équipements du plan de données des passerelles de transfert et de la passerelle d'interconnexion sont remplacés par des commutateurs OpenFlow^{™} ; le dispositif de contrôle est responsable de l'établissement du plan de données.

Cette proposition bien que simplifiant la configuration des équipements du cœur de réseau, s'appuie toutefois sur les mêmes interfaces entre les entités de contrôle du réseau que celles définies par le consortium 3GPP et mentionnées précédemment (i.e. interfaces S1, S11 et S5 utilisant le protocole GTP). La solution proposée par J. Kempf et al. ne permet donc pas de remédier totalement aux inconvénients précités. Elle ne permet pas notamment de réduire la signalisation induite par l'établissement de tunnels de communication GTP entre les entités du réseau de sorte à améliorer la gestion des ressources au sein du réseau et permettre le support de nouveaux services par les opérateurs de cœurs de réseau IP.

Une autre architecture de cœur de réseau a été proposée dans l'article « SoftCell : Taking Control of Cellular Core Networks » de Xin Jin et al., Cornell University Library, publié le 15 mai 2013. Cette architecture comprend un contrôleur, des commutateurs de cœur de réseau (« core switches ») et des équipements intermédiaires distribués (« middleboxes ») tels que des pare-feux, des transcodeurs, etc. Le contrôleur a notamment pour fonction de regrouper les flux de données selon plusieurs dimensions (i.e. politiques, stations de base et terminaux) en agrégats de flux multidimensionnels, gérés par les commutateurs d'accès des stations de base, et doit donc contrôler directement les stations de base afin d'intervenir sur l'agrégation de ces flux. De plus, le type de trafic doit être pris en compte pour définir les équipements intermédiaires empruntés par les flux de données, en particulier lors de leur agrégation au niveau des stations de base, ce qui complexifie la définition du plan de données, tout en limitant avec la prise en compte nécessaire de ce type de paramètre.

Cette autre architecture s'avère particulièrement complexe car elle nécessite l'utilisation, au niveau du contrôleur, d'attributs d'utilisateurs et de terminaux, ainsi que la modification des entêtes IP à partir d'adresses dépendant de la localisation (« location dépendent address »). Or, suite à un handover, un terminal peut avoir à changer une telle adresse dépendant de la localisation, ce qui nécessite le routage des anciens flux sur une adresse différente des nouveaux flux. Enfin, cette architecture impacte nécessairement les stations de base et les éléments de contrôle radio de type MME, car il est nécessaire que le MME ne commande pas l'établissement des tunnels GTP contrairement à ce qui est fait dans la norme 3GPP.

### Objet et résumé de l'invention

L'invention offre une solution à ce problème notamment en proposant un cœur de réseau IP comme définit dans la revendication 1.

L'invention s'appuie ainsi sur les principes SDN du réseau défini par logiciel pour découpler les plans de données et de contrôle dans le cœur de réseau IP. Il en résulte une nouvelle architecture de cœur de réseau IP programmable et permettant une (re)configuration dynamique du plan de données.

Plus précisément, l'invention propose de contrôler, par l'intermédiaire d'un dispositif de contrôle par exemple logiciel, un plan de données relativement simple s'appuyant sur des routeurs (opérant au niveau de la couche 3 du modèle OSI (Open Systems Interconnection) du réseau) et des commutateurs (opérant au niveau de la couche 2 du modèle OSI (Open Systems Interconnection)), déployés dans le cœur de réseau IP. Chaque routeur est connecté à un ou plusieurs commutateurs, et chaque commutateur est connecté à une ou plusieurs stations de base d'un réseau d'accès. Conformément à l'invention, ces routeurs et ces commutateurs sont programmables par le biais de règles de traitement définies par le dispositif de contrôle et mises à jour en fonction de la topologie courante du réseau. Cette topologie, qui peut être modélisée par un arbre, reflète les connexions existant entre les routeurs, les commutateurs, les stations de base et les terminaux enregistrés auprès du cœur de réseau IP et connectés le cas échéant aux stations de base (autrement dit, les connexions existant à la fois dans le cœur de réseau et dans le réseau d'accès). Ainsi l'invention offre la possibilité d'adapter le routage/transfert des divers flux de données au sein du réseau en fonction de divers paramètres liés à la topologie du réseau (ex. conditions de trafic, charge des équipements, qualité de service (ou QoS pour « Quality of Service » en anglais), résilience, sécurité, etc.), sans requérir d'intervention ultérieure de l'entité de gestion de la mobilité ou d'autre entité du cœur de réseau.

Pour actualiser les informations de topologie du réseau utilisées par le dispositif de contrôle pour définir les règles de traitement, l'invention s'appuie avantageusement sur la définition d'une interface de communication entre le dispositif de contrôle et l'entité de gestion de la mobilité du cœur de réseau. Cette interface prévoit notamment la transmission par l'entité de gestion de la mobilité au dispositif de contrôle d'informations dites d'état relatives à l'état des terminaux servis par les stations de base qui sont connectées à l'entité de gestion de la mobilité. Par état des terminaux, on entend ici un état de connectivité IP et/ou un état de mobilité du terminal.

Ainsi, par exemple, l'information d'état reçue de l'entité de gestion de la mobilité peut être représentative d'au moins un état parmi :
- un état enregistré ou non enregistré auprès du cœur de réseau IP ; et/ou
- un état connecté ou inactif.

Elle peut en outre comprendre un identifiant de la station de base du réseau d'accès à laquelle est attaché (i.e. connecté) le terminal, ainsi qu'un identifiant du terminal (ex. une adresse IP et/ou un identifiant de réseau tel un IMSI). Ces éléments permettent de mettre à jour les informations de topologie du réseau et notamment la connectivité IP des stations de base et des terminaux. L'identifiant de la station de base revêt une importance plus particulière lorsque le terminal se trouve dans une situation de basculement (aussi désigné par « handover » en anglais) entre deux stations de base afin d'informer le dispositif de contrôle de la station de base vers laquelle le basculement a été opéré.

L'entité de gestion de la mobilité dispose de ces informations d'état à partir des messages qu'elle échange avec les stations de base : cette entité, de par sa fonction au sein du cœur de réseau, reçoit en effet divers messages en provenance des stations de base lors notamment de procédures d'attachement de terminaux, de handover entre deux stations de base, etc., qui lui permettent de déterminer l'état courant du terminal.

La nouvelle architecture de cœur de réseau proposée par l'invention, et en particulier l'interface directe entre l'entité de gestion de la mobilité et le dispositif de contrôle, permet donc de gérer aisément la mobilité des terminaux au sein du réseau et de s'affranchir de l'établissement de tunnels de communication GTP tel que prévu actuellement par le consortium 3GPP. Il en découle une signalisation limitée dans les entêtes des paquets transportant ces données.

Plus précisément, les passerelles de transfert de données S-GW et d'interconnexion P-GW définies dans les architectures LTE/EPC proposées par le consortium 3GPP et par J. Kempf et al., sont conformément à l'invention, remplacées par des commutateurs et des routeurs commandés par le dispositif de contrôle, et opérant au niveau des couches 2 et 3 respectivement du réseau. Ces commutateurs et ces routeurs s'échangent des paquets de données IP sans établir de tunnels GTP. Les commutateurs étant par ailleurs eux-mêmes connectés aux stations de base, celles-ci peuvent également émettre et/ou recevoir des paquets IP au lieu de paquets encapsulés selon GTP.

En d'autres termes, les stations de base dans l'architecture selon l'invention sont similaires à celles de l'art antérieur à l'exception du fait qu'elles émettent maintenant et/ou reçoivent des paquets de données IP à destination et/ou en provenance de commutateurs au lieu de paquets de données GTP à destination et/ou en provenance de passerelles de transfert de données S-GW. Il en résulte que les messages échangés entre les stations de base et l'entité de gestion de la mobilité du cœur de réseau pour la création, la modification et/ou la terminaison des tunnels GTP établis avec les passerelles S-GW ne sont plus nécessaires. Aucune interface n'est par ailleurs requise entre l'entité de gestion de la mobilité et les routeurs/commutateurs du cœur de réseau, ceux-ci communiquant directement avec les stations de base.

Il convient de noter que le nouveau plan de données défini par l'invention est généralisé (i.e. standard) et relativement simple : il est indépendant du type de trafic qui s'échange entre les différents équipements du réseau. Il peut ainsi être utilisé de façon efficace pour mettre en œuvre divers services de communication, ce qui permet de réduire le temps de développement et les coûts matériels nécessaires à la provision d'un service au niveau du cœur de réseau IP.

L'invention propose donc avantageusement une nouvelle architecture de cœur de réseau flexible et (re)configurable offrant la possibilité de gérer dynamiquement et aisément les ressources du réseau. Cette architecture s'appuie sur un dispositif de contrôle aisément programmable, par exemple via le développement de fonctions logicielles au-dessus du dispositif de contrôle, communiquant avec celui-ci par le biais d'interfaces de programmation. Elle peut ainsi supporter facilement l'intégration de nouveaux services proposés par les opérateurs de cœurs de réseau. L'invention s'applique donc de façon privilégiée à une architecture de cœur de réseau LTE/EPC.

Dans un mode particulier de réalisation, le module de commande du dispositif de contrôle est configuré pour communiquer avec ledit au moins un routeur et ledit au moins un commutateur par l'intermédiaire du protocole OpenFlow^{™}.

L'utilisation du protocole OpenFlow facilite l'implémentation de l'invention.

En outre, ce protocole offre la possibilité au dispositif de contrôle de collecter en temps réel des statistiques de charge et de trafic auprès des routeurs et des commutateurs du cœur de réseau. Ainsi, non seulement la topologie du réseau est prise en compte pour mettre à jour les règles de traitement appliquées par les routeurs et les commutateurs du cœur de réseau, mais on peut également envisager de tenir compte d'autres facteurs comme notamment la charge de ces équipements et les conditions de trafic au sein du réseau (e.g. perte de lien), voire des critères de QoS, de résilience ou de sécurité concernant certains flux de données.

Dans un mode de réalisation de l'invention, le module de commande du dispositif de contrôle est apte à ajouter, modifier et/ou supprimer au moins une entrée d'une table de flux stockée par ledit au moins un routeur et/ou ledit au moins un commutateur reflétant une règle de traitement.

Corrélativement, l'étape d'actualisation du procédé de commande selon l'invention comprend un ajout, une modification et/ou une suppression d'au moins une entrée d'une table de flux stockée par ledit au moins un routeur et/ou ledit au moins un commutateur reflétant cette règle de traitement.

La réalisation de l'une ou l'autre de ces actions dépend de l'état du terminal. Ainsi, par exemple, si le terminal est dans un état enregistré auprès du cœur de réseau et connecté à une station de base du réseau d'accès, une nouvelle entrée peut être ajoutée dans la table de flux du routeur et/ou du commutateur pour commander le transfert des données transmises en liaison descendante à destination de ce terminal vers cette station de base.

Selon un autre exemple, si le terminal est dans un état enregistré auprès du cœur de réseau mais devient inactif, l'entrée associée aux flux de données destinés à ce terminal peut être supprimée de la table de flux, etc. Il en est de même quand le terminal est dans un état non enregistré.

La commande des routeurs et/ou commutateurs par le dispositif de contrôle est donc particulièrement simple à mettre en œuvre en s'appuyant sur la construction dynamique et le maintien à jour de tables de flux au niveau des routeurs et/ou des commutateurs.

Dans un mode particulier de réalisation, le procédé de commande comprend en outre, avant l'étape de réception, une étape d'envoi à l'entité de gestion de la mobilité d'un message l'informant d'une réception par un dit routeur d'un paquet à destination d'un terminal enregistré auprès du cœur de réseau se trouvant dans un état de connectivité IP inactif.

L'envoi de ce message a pour but de déclencher auprès de l'entité de gestion de la mobilité une procédure de recherche du terminal de sorte à l'inciter à établir une connexion avec le réseau afin d'être capable de recevoir le paquet (et par extension le flux) de données qui lui est destiné.

Dans un autre mode de réalisation, le procédé de commande comprend en outre une étape d'interrogation d'un serveur de configuration dynamique d'adresses IP du cœur de réseau IP afin d'obtenir une adresse IP valide pour un terminal, cette étape d'interrogation étant déclenchée par un message reçu de l'entité de gestion de la mobilité.

Ce mode de réalisation revêt une importance particulière lors de l'enregistrement du terminal auprès du cœur de réseau puisqu'il permet à celui-ci d'obtenir une adresse IP dynamique via le dispositif de contrôle.

Il découle de ce qui précède que la nouvelle architecture proposée par l'invention s'appuie plus particulièrement sur deux entités du cœur de réseau, à savoir sur le dispositif de contrôle (logiciel) précédemment décrit, et sur l'entité de gestion de la mobilité avec laquelle le dispositif de contrôle dispose d'une interface de communication.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente l'architecture d'un cœur de réseau LTE/EPC telle que proposée par le consortium 3GPP ;
- les figures 2 et 3 illustrent les principes d'un réseau SDN défini par logiciel ;
- la figure 4 représente, dans son environnement, un cœur de réseau, un dispositif de contrôle, et une entité de gestion de la mobilité conformes à l'invention dans un mode particulier de réalisation ;
- les figures 5A et 5B représentent schématiquement l'architecture matérielle d'un dispositif informatique implémentant le dispositif de contrôle et celle d'un dispositif informatique implémentant l'entité de de gestion de la mobilité illustrés à la figure 4 ; et
- les figures 6 à 8 représentent respectivement les principales étapes d'une procédure d'attachement d'un terminal au cœur de réseau de la figure 4, de handover d'un terminal entre deux stations de base, et de déclenchement d'une connexion d'un terminal inactif, pouvant être mises en œuvre par le cœur de réseau de la figure 4 en s'appuyant sur les procédés de commande et de communication selon l'invention.

### Description détaillée de l'invention

Comme mentionné précédemment, l'invention propose d'implémenter les principes d'une architecture SDN de réseau défini par logiciel au sein d'un cœur de réseau IP, tel que par exemple un cœur de réseau LTE/EPC, de sorte à améliorer la flexibilité et la gestion des ressources au sein de ce cœur de réseau. L'implémentation proposée par l'invention s'appuie en outre avantageusement sur la définition d'une interface de communication avec l'entité de gestion de la mobilité du cœur de réseau IP, ce qui permet de s'affranchir de l'établissement de tunnels GTP au-dessus des protocoles UDP/TCP et IP, et simplifier ainsi la gestion de la mobilité des terminaux dans le réseau.

Plus précisément, l'invention définit un nouveau plan de contrôle (signalisation) et un nouveau plan de données dans le cœur de réseau IP selon lesquels une pluralité de routeurs (opérant au niveau de la couche 3 du modèle OSI (Open Systems Interconnection) du réseau) et de commutateurs (opérant au niveau de la couche 2 du modèle OSI (Open Systems Interconnection)) connectés à des stations de base d'un (ou de plusieurs) réseau d'accès, sont commandés par un dispositif de contrôle centralisé.

Dans le mode de réalisation décrit ici, le dispositif de contrôle est un dispositif de contrôle logiciel, programmable, qui commande les routeurs et les commutateurs à l'aide de règles de traitement définies et actualisées à partir d'informations de topologie du réseau, via le protocole OpenFlow^{™} décrit notamment dans le document « Openflow switch spécification, version 1.3.1 », Septembre 2012. Les informations de topologie du réseau sont elles-mêmes maintenues à jour à partir d'informations d'état des terminaux remontées par l'entité de gestion de la mobilité du cœur de réseau IP qui dispose d'une interface de communication directe avec les stations de base du réseau d'accès.

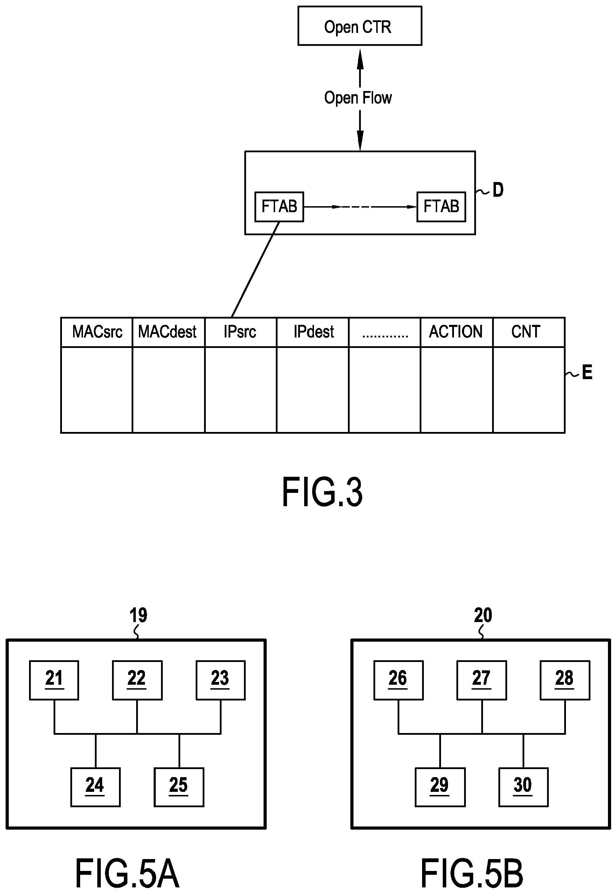

Pour faciliter la compréhension de l'invention, nous allons dans un premier temps rappeler brièvement, en référence aux figures 2 et 3, les principes généraux d'une architecture SDN. Une telle architecture est décrite en détail dans le document édité par l'ONF intitulé « Software-Defined Networking: The New Norm for Networks », 13 avril 2012. Dans l'exemple retenu pour illustrer ces principes, l'architecture SDN repose sur l'utilisation du protocole OpenFlow^{™}.

Comme mentionné précédemment, le concept SDN permet de spécifier le comportement d'équipements réseau à l'aide de programmes de contrôle haut niveau, ce qui permet d'automatiser aisément certaines tâches comme la configuration des équipements du réseau ou la gestion des politiques (ou services) appliquées au niveau du réseau.

A cet effet, l'architecture SDN centralise l'intelligence du réseau (i.e. les fonctions de contrôle du réseau et de ses équipements) dans un dispositif de contrôle (ou contrôleur) logiciel. Le comportement des équipements du réseau en présence de données relatives à un terminal ou plus précisément à une session de communication est alors défini par le dispositif de contrôle au moyen de règles dites de traitement ou de transfert, transmises à ces équipements. Ces règles sont stockées par les équipements du réseau et sont destinées à être appliquées par ceux-ci sur réception de paquets ou de flux de données. Elles spécifient notamment les équipements du réseau vers lesquels transférer les données (i.e. le trafic) en liaisons montante et descendante.

La **figure 2** résume ce mode de fonctionnement en modélisant schématiquement une architecture SDN selon trois couches :
- une couche inférieure DP, modélisant le plan de données et comprenant des équipements D de réseau commandés (contrôlés) par le dispositif de contrôle (ces équipements D peuvent être indifféremment physiques ou virtuels) ;
- une couche intermédiaire NW CTRL, modélisant à proprement parler le dispositif de contrôle logiciel référencé par « OpenCTR » ; et
- une couche supérieure APPL, modélisant diverses applications ou fonctions de contrôle APP utilisées par le dispositif de contrôle OpenCTR pour commander les équipements de réseau D du plan de données DP et élaborer les règles de traitement.

Les différentes couches précitées communiquent entre elles via des interfaces de programmation ou API appelées « NorthBound API » et « SouthBound API » (notées respectivement « NB API » et « SB API » sur la figure 3). Les interfaces de programmation SB API entre le dispositif de contrôle OpenCTR et le plan de données implémentent ici le protocole de communication OpenFlow. Les interfaces de programmation NB API sont basées sur n'importe quel protocole de communication ouvert, choisi par exemple parmi les protocoles connus SOAP (pour « Simple Object Access Protocol »), RPC (pour « Remote Procédure Call ») ou REST (pour « Representational State Transfer »).

Comme rappelé précédemment et illustré à la **figure 3****,** le protocole OpenFlow^{™} permet au dispositif de contrôle logiciel OpenCTR de commander aisément chaque équipement de réseau D au moyen d'un ensemble de règles de traitement de données, incluant notamment des règles de transfert (ou de routage) de données destinées à être appliquées par l'équipement de réseau sur réception de données relatives à une session de communication (autrement dit, échangées lors d'une session de communication).

Ces règles de traitement sont déterminées par le dispositif de contrôle OpenCTR en fonction par exemple de la politique de l'opérateur envisagée pour la gestion du réseau. Elles spécifient le traitement devant être appliqué par chaque équipement sur réception d'un paquet d'un flux de données associé à une session de communication d'un terminal, et des paquets suivants associés au même flux.

Ces règles de traitement sont stockées au niveau de chaque équipement de réseau D sous la forme de tables de flux FTAB (ou « flow tables » en anglais), dont les entrées peuvent être aisément modifiées par le dispositif de contrôle OpenCTR à l'aide du protocole OpenFlow^{™} (ex. ajout, mise à jour, suppression d'entrées dans la table).

A titre illustratif, une entrée E d'une telle table de flux FTAB est représentée sur la figure 3. Elle se présente sous la forme de plusieurs champs ou paramètres destinés à être examinés par l'équipement de réseau D sur réception d'un paquet de données, en vue d'identifier quel traitement appliquer sur ce paquet (par exemple vers quel équipement du cœur de réseau ou du réseau d'accès transférer ce paquet).

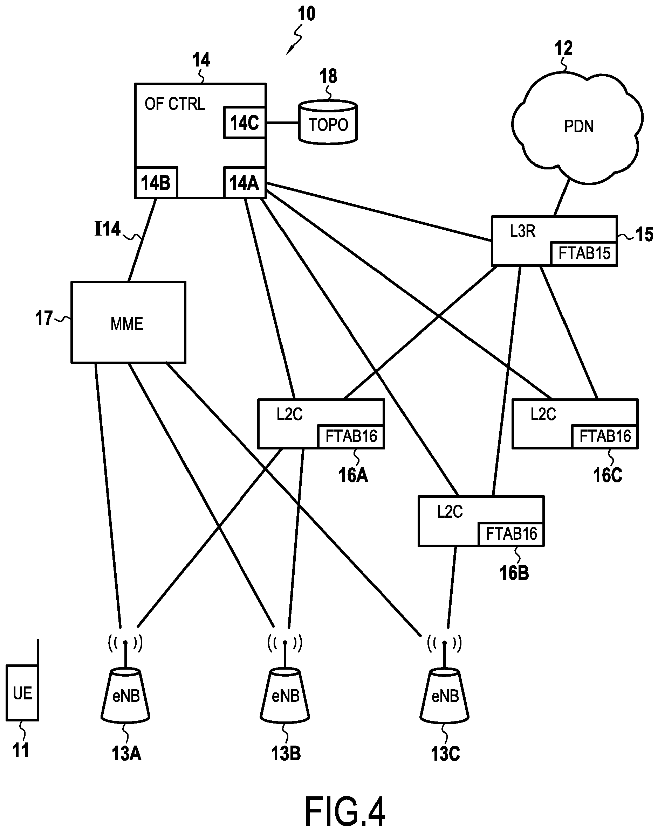

Ces champs incluent par exemple des champs d'adresses sources et/ou destinataires, tels que des adresses MAC (Médium Access Control), MACsrc et MACdest, et/ou des adresses IP, IPsrc et IPdest. Un ou plusieurs champs peu(ven)t être spécifié(s) pour chaque entrée. Il(s) spécifie(nt) les adresses qui doivent être présentes dans l'entête des paquets auxquels se rapporte cette entrée E de la table de flux. Chaque entrée E de la table spécifie également un champ ACTION définissant le traitement à appliquer sur les paquets correspondant à cette entrée E. D'autres champs peuvent bien entendu être également définis pour chaque entrée de la table FTAB en sus des champs précités, comme illustré sur la figure 4, tels que par exemple un champ CNT (pour « Counter »), un champ définissant un port d'entrée et/ou de sortie, etc.

L'équipement de réseau D utilise les tables de flux FTAB ainsi définies de la façon suivante.

Sur réception d'un paquet de données, il cherche dans les tables FTAB stockées si le(s) champ(s) MACsrc, MACdest, IPsrc, IPdest spécifié(s) d'une entrée coïncide avec le(s) champs de l'entête de ce paquet.

Le cas échéant, les instructions associées à cette entrée indiquées dans le champ ACTION sont exécutées par l'équipement de réseau D sur le paquet de données (ex. transférer le paquet vers un équipement déterminé du réseau, ou modifier ou supprimer le paquet).

Si en revanche, aucune entrée ne coïncide avec l'entête du paquet reçu, celui-ci est transféré vers le dispositif de contrôle OpenCTR qui crée une nouvelle entrée de table de flux et un traitement associé à cette entrée (autrement dit une nouvelle règle de traitement), et la transmet à l'équipement de réseau D pour qu'il la stocke dans une table de flux.

Les plans de contrôle et de données au sein de l'architecture SDN sont ainsi bien découplés.

Nous allons maintenant décrire, en référence aux figures 4 à 8, comment l'invention propose avantageusement d'appliquer ce principe à une architecture de cœur de réseau IP, et plus particulièrement à une architecture de cœur de réseau LTE/EPC.

Par souci de simplification de l'exposé, lorsqu'aucune précision n'est apportée dans la description, les fonctions et les modes de fonctionnement des équipements de réseau considérés (en particulier des stations de bases de type eNodeB, des terminaux mobiles de type UE et de l'équipement de gestion de mobilité de type MME) sont similaires ou identiques à ceux décrits dans le document 3GPP TS 23.401 édité par le 3GPP et ne sont pas détaillés davantage ici. L'invention ne se limite toutefois pas aux seuls réseaux de télécommunications LTE et peut être également appliquée à d'autres architectures de cœurs de réseau basés sur le protocole IP (« all IP networks »), tels que par exemple une architecture de cœur de réseau propriétaire.

La **figure 4** représente un cœur de réseau LTE/EPC 10 conforme à l'invention, dans un mode particulier de réalisation dans lequel ce cœur de réseau 10 permet à un terminal UE 11 d'accéder à des services offerts par un réseau externe de paquets de données PDN 12.

On suppose ici, que pour accéder à ces services, le terminal UE 11 est connecté à une station de base 13A d'un réseau d'accès (typiquement une station de base de type eNodeB similaire à celle définie dans le document 3GPP TS 23.401), tel que par exemple un réseau de télécommunications mobiles UMTS. Aucune limitation n'est toutefois attachée à la nature du réseau d'accès utilisé par le terminal UE 11 dès lors que celui-ci est compatible avec le cœur de réseau 10. Par ailleurs, l'invention peut également s'appliquer dans un contexte où plusieurs réseaux d'accès et/ou plusieurs réseaux de paquets de données externes sont reliés au cœur de réseau IP 10.

Conformément à l'invention et au principe du SDN rappelé précédemment, les plans de contrôle et de données sont découplés dans le cœur de réseau 10. Ce découplage est assuré par un dispositif de contrôle 14 conforme à l'invention, reprenant les principes de fonctionnement du dispositif de contrôle OpenCTR précédemment décrits en référence à la figure 2.

Ce dispositif de contrôle 14 commande différents équipements participant au plan d'accès du cœur de réseau 10, à savoir :
- un (ou plusieurs) routeur(s) 15 vers le réseau externe de paquets de données PDN 12, opérant au niveau de la couche 3 du modèle OSI ; et
- une pluralité de commutateurs 16A, 16B et 16C connectés au routeur 15 et opérant au niveau de la couche 2 du modèle OSI, chaque commutateur 16A, 16B et 16C (plus généralement désigné par la référence 16) étant connectés à une ou plusieurs stations de base du réseau d'accès désignée(s) généralement par la référence 13. Ainsi, dans l'exemple illustré à la figure 4, le commutateur 16A est relié aux stations de base 13A et 13B et le commutateur 16B est relié à la station de base 13C.

Bien entendu, aucune limitation n'est attachée au nombre de routeurs ou de commutateurs reliés au routeur, ni même au nombre de stations de base connectés à ces routeurs.

Le dispositif de contrôle 14 commande ces équipements par l'intermédiaire d'un module de commande 14A, et élabore ainsi le plan d'accès du cœur de réseau 10 en définissant des règles de traitement devant être appliquées par le routeur 15 et par les commutateurs 16 aux paquets de données IP qu'ils reçoivent en liaisons montante et descendante. Ces règles de traitement sont ici des règles de transfert des paquets de données IP reçus par le routeur 15 et par les commutateurs 16, identifiant en fonction de différents critères vérifiés par l'entête de ces paquets (ex. adresse MAC ou IP source ou destinataire, comme illustré à la figure 4), l'entité vers laquelle les transférer. Ainsi, à titre d'exemple, pour le routeur 15, une telle règle de traitement identifie l'un des commutateurs 16A, 16B et 16C vers lequel transférer un paquet (et plus généralement un flux) de données en fonction des champs présents dans son entête lorsque celui-ci est reçu en liaison descendante. Selon un autre exemple, pour le commutateur 16A, une telle règle de traitement identifie en liaison montante, le routeur 15 vers lequel transférer un paquet et, en liaison descendante, la station de base 13A ou 13B du réseau d'accès vers laquelle transférer un paquet de données.

Dans le mode de réalisation décrit ici, le module de commande 14A commande le routeur 15 et les commutateurs 16 en s'appuyant sur le protocole OpenFlow^{™}. Plus précisément, les règles de traitement définies par le module de commande 14A sont stockées au niveau de chaque routeur 15 et de chaque commutateur 16 dans des tables de flux FTAB15 et FTAB16 respectivement (ou « flow tables » en anglais), dont les entrées peuvent être aisément modifiées (ex. ajout, mise à jour, suppression d'entrées dans la table) par le module de commande 14A à l'aide du protocole OpenFlow^{™}. Les tables FTAB15 et FTAB16 sont similaires ou identiques aux tables FTAB décrites précédemment en référence à la figure 3.

Inversement, le routeur 15 et/ou les commutateurs 16 sont aptes à solliciter le dispositif de contrôle 14 via un message synchrone Packet In défini dans le protocole OpenFlow^{™}, lorsqu'ils reçoivent un paquet de données ne correspondant à aucune entrée de leurs tables de flux respectives. Le protocole OpenFlow^{™} étant connu de l'homme du métier, il n'est pas détaillé davantage ici.

Il convient de noter que le routeur 15, les commutateurs 16 et les stations de base 13 s'échangent avantageusement des paquets de données IP directement, et non plus des paquets de données encapsulés via le protocole GTP. Ainsi, les stations de base 13 diffèrent des stations eNodeB définies dans le standard 3GPP en ce qu'elles émettent et reçoivent maintenant des paquets de données IP en lieu et place des paquets de données GTP prévus par la norme 3GPP.

Conformément à l'invention, le cœur de réseau 10 comprend également une entité de gestion de la mobilité du réseau 17 conforme à l'invention, et reliée aux stations de base 13 du réseau d'accès. Cette entité de gestion de la mobilité du réseau 17 est par exemple similaire à une entité MME telle que définie dans le document TS23.401. Elle diffère toutefois de celle-ci en ce qu'elle dispose d'une interface I14 de communication avec le dispositif de contrôle 14 (et plus précisément avec un module 14B de communication du dispositif de contrôle 14), et en ce qu'elle n'échange plus avec les stations de base 13 qui lui sont reliées de messages de création/modification ou terminaison de tunnels GTP. Il convient de noter par ailleurs que dans l'architecture de cœur de réseau IP proposée par l'invention, les passerelles de transfert de données S-GW et d'interconnexion P-GW ne sont plus présentes. Elles ont été remplacées respectivement par des commutateurs 16 et un routeur 15. Toutefois, dans le mode de réalisation décrit ici, aucune interface directe n'est prévue entre l'entité de gestion de la mobilité 17 et les commutateurs 16.

L'interface de communication I14 permet à l'entité de gestion de la mobilité 17 d'informer le dispositif de contrôle 14 de l'état des terminaux UE (et notamment du terminal 11) servis par les stations de base 13 ou connectés à celles-ci. Par état d'un terminal, on entend ici un état de mobilité ou de connectivité IP. Dans le mode de réalisation décrit ici, on envisage quatre états d'un terminal pouvant être reportés par l'entité 17 au dispositif de contrôle 14, à savoir :
- un état enregistré ou non enregistré auprès du cœur de réseau IP 10 ; et
- un état connecté (à une station de base du réseau d'accès) ou inactif (« idle » en anglais).

Ces quatre états correspondent respectivement aux états « EMM(EPS(Evolved Packet System)Mobility Management)-Registered », « EMM-Deregistered », « ECM(EPS Connection Management)-Connected » et « ECM-Idle » décrits dans le document 3GPP TS 23.401.

Dans le mode de réalisation décrit ici et dans la suite de la description, ces états sont signalés et transmis au dispositif de contrôle 14 par l'intermédiaire d'un nouveau message « UE State Disclose » auquel le dispositif de contrôle répond par un nouveau message « UE State Disclose Ack ».

Les informations d'état des terminaux rapportées par l'entité de gestion de la mobilité 17 peuvent également contenir un identifiant de ces terminaux tel un numéro IMSI (International Mobile Subscriber Identity), une adresse IP (ou MAC) de ces terminaux et/ou le cas échéant l'adresse IP des stations de base auxquelles ils sont connectés.

Les informations d'état sont utilisées par le dispositif de contrôle 14 pour mettre à jour, par l'intermédiaire d'un module de maintien à jour 14C, des informations de topologie TOPO du réseau.

Les informations de topologie TOPO sont stockées ici dans une base de données 18 du cœur de réseau 10. Elles modélisent la topologie en arbre du réseau (réseau d'accès et cœur de réseau), et représentent notamment les connexions existant entre le routeur 15, les commutateurs 16, les stations de base 13 et les terminaux UE enregistrés auprès du cœur de réseau 10. Elles sont initialisées à partir des connexions établies initialement par l'opérateur du cœur de réseau 10 entre le routeur 15, les commutateurs 16 et les stations de base 13 puis sont actualisées en fonction des informations d'état remontées par l'entité de la gestion de la mobilité 17 pour refléter la connectivité des terminaux UE et des stations de base 13.

Ces informations de topologie ainsi maintenues à jour dynamiquement par le module 14C sont utilisées par le module de commande 14A pour définir et/ou actualiser via le protocole OpenFlow^{™} les règles de traitement des paquets de données transitant par le cœur de réseau (en liaisons montante et descendante) qui sont définies pour commander le routeur 15 et les commutateurs 16.

Ainsi, à titre d'exemple, lorsqu'il résulte de l'information d'état transmise par l'entité de gestion de la mobilité 17 que le terminal UE 11, identifié par son adresse IP, est dans un état «enregistré et connecté auprès d'une station de base 13A du réseau d'accès », le dispositif de contrôle 14 met à jour les informations de topologie correspondantes dans la base 18, et ajoute via le protocole OpenFlow^{™} de nouvelles entrées dans les tables FTAB15 du routeur 15 et FTAB16 du commutateur 16A reflétant respectivement la connexion existant entre le terminal 11 et la station de base 13A, entre la station de base 13A et le commutateur 16A, et entre le commutateur 16A et le routeur 15. De cette sorte, un paquet de données IP destiné au terminal 11 (i.e. autrement dit dans l'entête duquel l'adresse IP du terminal 11 est présente comme adresse IP destinataire) arrivant du réseau externe 12 et reçu par le routeur 15 est transféré par celui-ci vers le commutateur 16A identifié dans sa table FTAB15 en correspondance avec l'adresse IP du terminal 11. Sur réception de ce paquet, le commutateur 16A le transfère vers la station de base 13A identifiée dans sa table de flux FTAB16 en correspondance avec l'adresse IP du terminal 11. Enfin, la station de base 13A achemine le paquet jusqu'au terminal 11.

Selon un autre exemple, lorsqu'il résulte de l'information d'état transmise par l'entité de gestion de la mobilité 17 que le terminal UE 11 est dans un état « enregistré et inactif », le dispositif de contrôle 14 supprime via le protocole OpenFlow^{™} les entrées dans les tables FTAB15 du routeur 15 et FTAB16 du commutateur 16A correspondant au paramètres de communication utilisés par le terminal 11 (ex. à son adresse IP). Il en est de même lorsqu'il résulte de l'information d'état transmise par l'entité de gestion de la mobilité 17 que le terminal UE 11 est dans un état « non enregistré »

Selon un autre exemple encore, lorsqu'il résulte de l'information d'état que le terminal est dans un état « enregistré et connecté », mais qu'il est maintenant rattaché à une nouvelle station de base (par exemple à la station de base 13B du fait d'un handover exécuté entre les stations de base 13A et 13B), le dispositif de contrôle 14 modifie via le protocole OpenFlow^{™} les entrées des tables FTAB15 du routeur 15 et FTAB16 des commutateurs 16A et 16B de sorte à refléter le changement de station de base, afin que les paquets de données IP destinés au terminal 11 soient correctement routés vers la station de base 13B.

Ces divers exemples illustrent une actualisation (ou mise à jour) au sens de l'invention des règles de traitement utilisées par le dispositif de contrôle 14 pour commander le routeur 15 et les commutateurs 16.

Dans le mode de réalisation décrit ici, le dispositif de contrôle 14 et l'entité de gestion de la mobilité 17 sont des entités logicielles, autrement dit des applications ou des programmes d'ordinateur qui s'exécutent sur des dispositifs informatiques ou ordinateurs 19 et 20 respectivement.

La **figure 5A** illustre schématiquement l'architecture matérielle d'un tel dispositif informatique 19. Ce dispositif comprend un processeur 21, une mémoire morte 22, une mémoire vive 23, une mémoire non volatile 24 et des moyens de communication 25, aptes en particulier à communiquer avec l'entité de gestion de la mobilité 17 selon l'interface I14 et avec le routeur 15 et les commutateurs 16 selon le protocole OpenFlow^{™}.

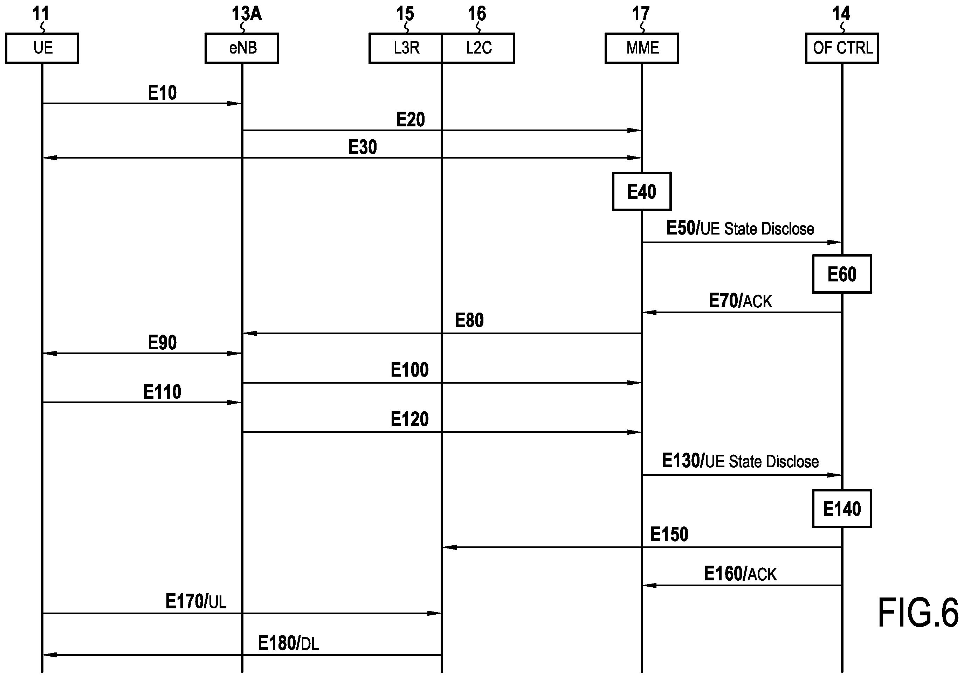

La mémoire morte 22 du dispositif informatique 19 constitue un support d'enregistrement conforme à l'invention, lisible par le processeur 21 et sur lequel est enregistré un programme d'ordinateur conforme à l'invention comportant des instructions pour l'exécution des étapes d'un procédé de commande selon l'invention dont les étapes sont illustrées ultérieurement en référence aux figures 6 à 8. Ce programme d'ordinateur définit de façon équivalente les modules fonctionnels 14A, 14B et 14C décrits précédemment.

La **figure 5B** illustre schématiquement l'architecture matérielle d'un dispositif informatique 20 implémentant l'entité de gestion de la mobilité 17 précédemment décrite. Ce dispositif comprend un processeur 26, une mémoire morte 27, une mémoire vive 28, une mémoire non volatile 29 et des moyens de communication 30, aptes en particulier à communiquer avec le dispositif de contrôle 14 selon l'interface I14 et avec les stations de base 13.

La mémoire morte 27 du dispositif informatique 20 constitue un support d'enregistrement conforme à l'invention, lisible par le processeur 26 et sur lequel est enregistré un programme d'ordinateur conforme à l'invention comportant des instructions pour l'exécution des étapes d'un procédé de communication selon l'invention dont les étapes sont illustrées ultérieurement en référence aux figures 6 à 8.

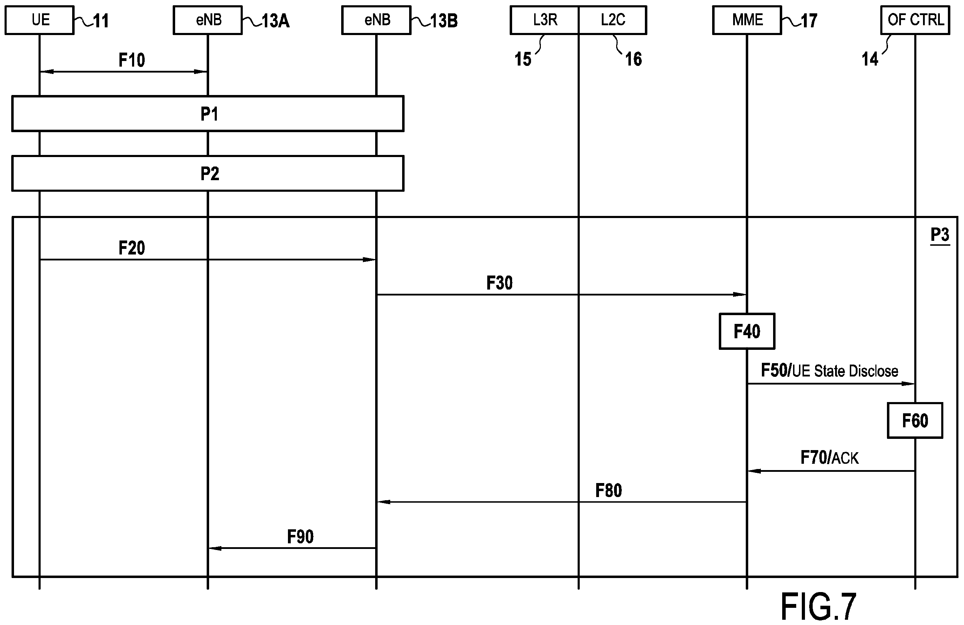

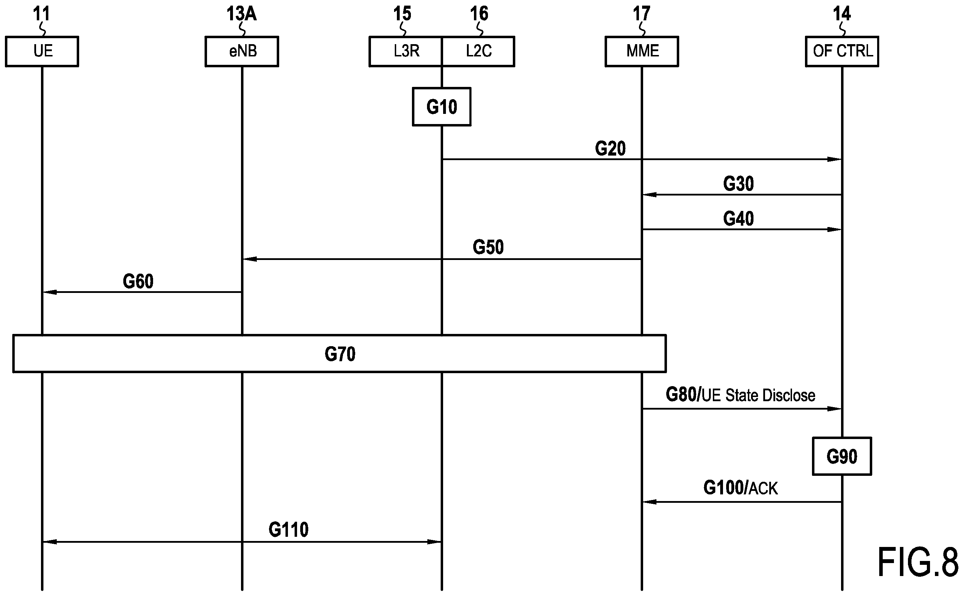

Nous allons maintenant illustrer plus en détails comment la nouvelle architecture de cœur de réseau définie selon l'invention et les procédés de commande et de communication mis en œuvre par les éléments de cette architecture s'interfacent aisément avec diverses procédures classiquement mises en œuvre dans un réseau, telle qu'une procédure d'attachement d'un terminal au cœur de réseau (cf. figure 6), une procédure de handover entre deux stations de base (cf. figure 7), et une procédure de « paging » d'un terminal inactif enregistré auprès du cœur de réseau (cf. figure 8). Ces trois procédures telles qu'elles sont représentées aux figures 6 à 8 respectivement sont basées sur les procédures correspondantes décrites dans le document 3GPP TS 23.401 modifiées de sorte à intégrer les principales étapes des procédés de commande et de communication selon l'invention.

La procédure d'attachement illustrée à la **figure 6** permet au terminal UE 11 de s'enregistrer auprès du cœur de réseau 10 et d'obtenir une adresse IP valide pour communiquer. On suppose par souci de simplification que les adresses IP sont des adresses IPv6 : ces adresses IP comprennent de façon connue en soi une partie statique et un préfixe, qui peut être alloué statiquement ou dynamiquement. La procédure décrite à la figure 6 est basée sur une version simplifiée et modifiée de la procédure d'attachement décrite en section 5.3.2.1 du document 3GPP TS 23.401. Les étapes identiques à la procédure décrite dans le document 3GPP TS 23.401 ne sont pas décrites de nouveau.

On suppose que le terminal 11 initie une procédure d'attachement en transmettant à la station de base 13A une requête d'attachement « Attach Request » contenant notamment un identifiant du terminal tel un identifiant IMSI (International Mobile Subscriber Identity) (étape E10).

Cette requête est relayée vers l'entité de gestion de la mobilité 17 (étape E20).

Une procédure d'identification et d'authentification du terminal 11 par l'entité de gestion de la mobilité 17 est alors mise en œuvre, de façon connue en soi (étape E30).

Dans le mode de réalisation décrit ici, l'entité de gestion de la mobilité 17 envoie ensuite une requête de mise à jour de la localisation du terminal 11 « Update Location Request » à un serveur d'abonnés du réseau HSS (non représenté sur les figures) (étape E40). Celui-ci lui retourne, dans un message de réponse « Update Location Answer », un préfixe d'adresse IPv6 assigné statiquement au terminal 11. L'entité de gestion de la mobilité 17 construit une adresse IP valide pour le terminal 11 à partir du préfixe reçu du serveur HSS. La correspondance entre l'identifiant IMSI du terminal 11 et son adresse IP est gardée en mémoire par l'entité de gestion de la mobilité 17, par exemple dans sa mémoire non volatile 29.

Dans une variante de réalisation, le préfixe de l'adresse IP allouée au terminal 11 est alloué dynamiquement par un serveur DHCP (Dynamic Host Configuration Protocol) de configuration dynamique d'adresses IP, connu en soi.

Plus précisément, selon cette variante, à l'issue de l'étape E30, l'entité de gestion de la mobilité 17 envoie un message sur l'interface I14 au dispositif de contrôle 14, afin d'obtenir une adresse IP valide pour le terminal 11. Ce message est ici un message « UE State Disclose » qui ne contient aucune information d'état du terminal 11. Il ne contient pas non plus d'adresse IP du terminal 11 (celle-ci n'étant pas encore attribuée), mais seulement son identifiant IMSI (étape E40).

Sur réception de ce message, le dispositif de contrôle 14 interroge un serveur DHCP et obtient un préfixe IPv6 alloué dynamiquement par ce serveur au terminal 11 (étape E50). Le dispositif de contrôle 14 mémorise, par exemple dans sa mémoire non volatile 24, l'identifiant IMSI du terminal 11 en association avec le préfixe IPv6 ainsi obtenu (étape E60). Puis il répond à l'entité de gestion de la mobilité 17 avec un message « UE State Disclose Ack » contenant l'identifiant IMSI du terminal 11 et le préfixe IPv6 attribué au terminal 11 (étape E70).

A partir du préfixe IPv6 (transmis par le serveur HSS ou par le dispositif de contrôle 14) et de l'IMSI du terminal 11, l'entité de gestion de la mobilité 17 initie un contexte pour le terminal 11 avec la station de base 13A (elle vérifie notamment à cette occasion la duplication de l'adresse IP allouée au terminal 11) (étape E80). Elle envoie à la station de base 13A un message « Attach Accept » d'acceptation de l'attachement du terminal 11. Un lien de communication valide est ainsi établi par l'entité 17 pour le terminal 11.

Puis la station de base 13A et le terminal 11 s'échangent des messages afin d'établir une connexion RRC (Radio Ressource control) comme défini dans le document TS 23.401 (étape E90).

A l'issue de cette étape, la station de base 13A envoie un message de réponse « Initiation Context Response » à l'entité de gestion de la mobilité 17 (E100).

Il convient de noter que conformément à l'invention et contrairement à l'état de la technique décrit dans le document TS 23.401, les messages d'initiation de contexte échangés entre l'entité de gestion de la mobilité 17 et la station de base 13A aux étapes E80 et E100 (i.e. messages «Initiation Context Setup » et «Initiation Context Response ») ne contiennent aucune information relative à l'établissement de tunnels GTP, puisque l'invention permet avantageusement de s'affranchir de l'établissement de tels tunnels.

Le terminal 11 envoie ensuite un message « Attach Complété » à la station de base 13A (étape E110).

La station de base 13A transfère ce message à l'entité de gestion de la mobilité 17 (étape E120). A ce stade de la procédure le terminal 11 est dans un état « EMM-Registered » et « ECM-Connected », c'est-à-dire enregistré auprès du cœur de réseau 10 et connecté à une station de base d'un réseau d'accès (en l'occurrence à la station de base 13A).

Sur réception de ce message, l'entité de gestion de la mobilité 17 détermine que le terminal 11 se trouve dans un état de mobilité « enregistré » et de connectivité IP « connecté ». Elle informe le dispositif de contrôle 14 de cet état en lui envoyant un message « UE State Disclose » contenant l'information d'état « EMM-Registered » et l'information d'état « ECM-Connected », ainsi que l'adresse IPv6 du terminal 11, son identifiant IMSI et l'adresse IP de la station de base 13A à laquelle le terminal 11 est connecté (étape E130).

Le dispositif de contrôle 14 met à jour les informations de topologie TOPO correspondantes avec la connexion ainsi établie entre le terminal 11 et la station de base 13A (étape E140), comme mentionné précédemment.

Il actualise par ailleurs les règles de traitement devant être appliquées par le routeur 15 et les commutateurs 16 en présence de paquets de données à destination de l'adresse IP du terminal 11 (ou de son identifiant IMSI) (étape E150).

On suppose, dans l'exemple décrit ici, que les règles de traitement devant être appliquées par le routeur 15 et les commutateurs 16 en présence de paquets provenant du terminal 11 (i.e. en liaison montante) ont été préalablement définies par le dispositif de contrôle 14 à partir des connexions existantes entre le routeur 15, les commutateurs 16 et les stations de base 13 et transmises au routeur 15 et aux commutateurs 16. On s'intéresse ici aux règles de traitement en liaison descendante.

Plus particulièrement, dans l'exemple envisagé ici, l'actualisation mise en œuvre par le dispositif de contrôle 14 consiste à ajouter une nouvelle entrée dans la table FTAB16 du commutateur 16A connecté à la station de base 13A indiquant qu'en présence d'un paquet dont l'entête contient comme adresse IP destinataire, l'adresse IP du terminal 11, ce paquet doit être transféré par le commutateur 16A vers la station de base 13A.

Le commutateur 16A actualise à son tour une table de flux similaire maintenue par la station de base 13A afin qu'elle lui transfère les paquets de données IP provenant du terminal 11.

Suite à cette actualisation, le dispositif de contrôle 14 répond à l'entité de gestion de la mobilité 17 en lui envoyant un message « UE State Disclose Ack » (étape E160).

Dès lors, des flux de données en liaison montante (étape E170) et en liaison descendante (étape E180) peuvent s'échanger entre le terminal 11 et le réseau externe 12, transitant par le routeur 15, le commutateur 16A et la station de base 13A.

Dans le mode de réalisation décrit ici, c'est l'entité de gestion de la mobilité 17 qui est responsable de créer un lien valide pour le terminal 11 avec le réseau d'accès en lui fournissant notamment une adresse IPv6 valide. Dans un autre mode de réalisation, le terminal 11 peut requérir directement une adresse IPv6 valide auprès du serveur DHCP. Le serveur DHCP se situe, comme mentionné précédemment, entre le dispositif de contrôle 14 et le routeur 15. La requête envoyée par le terminal 11 au serveur DHCP contient l'identifiant IMSI du terminal 11. Cette requête étant considérée comme du trafic dans le plan de données, elle est routée via le dispositif de contrôle 14 jusqu'au serveur DHCP. Le terminal 11 est alors chargé de vérifier la duplication de l'adresse IP attribuée par le serveur DHCP. Le serveur DHCP se synchronise ensuite avec le dispositif de contrôle 14 en lui communiquant la correspondance entre l'identifiant IMSI du terminal 11 et son adresse IP.

Nous allons maintenant décrire, en référence à la **figure 7****,** les différentes étapes mises en œuvre par l'entité de gestion de la mobilité 17 et le dispositif de contrôle 14 du cœur de réseau 10 lors d'une procédure de handover du terminal 11 entre deux stations de base du réseau d'accès, à savoir entre les stations de base 13A (station de base source) et 13B (station de base cible). La procédure de handover décrite maintenant est basée sur une version simplifiée et modifiée de la procédure de handover décrite en section 5.5.1.1.2 du document 3GPP TS 23.401. Les étapes identiques à la procédure décrite dans le document 3GPP TS 23.401 ne sont pas décrites de nouveau.

On suppose que le terminal 11 participe à une session de données active avec la station de base 13A lors de ce handover (étape F10), par exemple suite à une procédure d'attachement du terminal 11 telle que décrite précédemment en référence à la figure 6.

De façon connue en soi, une procédure de handover se déroule selon trois phases :
- une phase P1 de préparation du handover, au cours de laquelle la station de base 13A, sur la base de mesures remontées par le terminal 11, détermine qu'un handover du terminal 11 vers une nouvelle station de base 13B (cible) est requis pour préserver la qualité de la liaison radio du terminal 11, et transmet à la station de base 13B une requête de handover du terminal 11 ;
- une phase P2 d'exécution à proprement parler du handover au cours de laquelle des ressources sont réservées au niveau de la station de base 13B (ou du réseau d'accès cible) pour le terminal 11 ; et
- une phase P3 de terminaison du handover.

La phase de préparation P1 et la phase P2 d'exécution à proprement parler du handover sont conformes aux phases correspondantes décrites dans le document 3GPP TS23.401 et ne sont pas rappelées ici.

Il en est de même des étapes mises en œuvre au cours de la phase P3 de terminaison pour établir un plan de données en liaison montante dans le réseau (i.e. auprès des entités du réseau d'accès et du cœur de réseau 10) (étape F20).

Nous décrivons donc ici uniquement l'établissement du plan de données en liaison descendante qui illustre plus précisément les étapes du procédé de commande et du procédé de communication mises en œuvre respectivement par le dispositif de contrôle 14 et l'entité de gestion de la mobilité 17 lors de la procédure de handover du terminal 11.

Suite à l'étape F20, la station de base cible 13B envoie une requête de changement de chemin « Path switch request » à l'entité de gestion de la mobilité 17 pour l'informer que le terminal 11 a changé de station de base (étape F30).

Sur réception de cette requête, l'entité de mobilité 17 détermine que le terminal 11 est maintenant dans un état de mobilité enregistré et de connectivité IP connecté à la station de base 13B (étape F40).

Elle informe alors le dispositif de contrôle 14 de cet état en lui envoyant un message « UE State Disclose » contenant l'information d'état « EMM-Registered », l'information d'état « ECM-Connected », l'adresse IPv6 du terminal 11, son identifiant IMSI ainsi que l'adresse IP de la station de base 13B à laquelle le terminal 11 est maintenant connecté (étape F50).

Sur réception de ces informations, le dispositif de contrôle 14 met à jour les informations de topologie TOPO correspondantes avec la connexion nouvellement établie entre le terminal 11 et la station de base 13B (étape F60), comme mentionné précédemment.

Il actualise par ailleurs les règles de traitement devant être appliquées par le routeur 15 et les commutateurs 16 en présence de paquets de données à destination de l'adresse IP du terminal 11 à partir des informations de topologie ainsi mises à jour.

Plus particulièrement, si les stations de base 13A et 13B sont connectées au même commutateur 16A (cf. cas envisagé à la figure 4), cette actualisation consiste à modifier l'entrée de la table FTAB16 du commutateur 16A (et plus précisément le champ « ACTION ») de sorte à indiquer qu'en présence d'un paquet dont l'entête contient comme adresse IP destinataire, l'adresse IP du terminal 11, ce paquet doit être transféré par le commutateur 16A vers la station de base 13B.

Si en revanche, les stations de base 13A et 13B sont connectées à des commutateurs distincts (par exemple aux commutateurs 16A et 16C respectivement), cette actualisation consiste à :
- modifier dans l'entrée de la table FTAB15 du routeur 15 de sorte à indiquer qu'en présence d'un paquet dont l'entête contient comme adresse IP destinataire, l'adresse IP du terminal 11, ce paquet doit être transféré par le routeur 15 vers le commutateur 16C ;
- supprimer l'entrée de la table FTAB16 du commutateur 16A ayant comme adresse IP destinataire, l'adresse IP du terminal 11 ; et
- ajouter une entrée dans la table FTAB16 du commutateur 16C indiquant qu'en présence d'un paquet dont l'entête contient comme adresse IP destinataire, l'adresse IP du terminal 11, ce paquet doit être transféré par le commutateur 16C vers la station de base 13B.

Le dispositif de contrôle 14 répond à l'entité de gestion de la mobilité 17 en lui envoyant un message « UE State Disclose Ack » (étape F70).

L'entité de gestion de la mobilité 17 envoie alors un message d'acquittement « Path switch request ack » à la station de base 13B (étape F80).

La station de base 13B demande alors à la station de base 13A de relâcher les ressources allouées au terminal 11 (étape F90).

Dans les procédures d'attachement et de handover décrites en référence aux figures 6 et 7, les messages « UE State Disclose » contenant les informations d'état du terminal 11 sont envoyés au dispositif de contrôle 14 à l'initiative de l'entité de gestion de la mobilité 17.

La **figure 8** illustre maintenant une procédure dans laquelle l'envoi de ces messages est déclenché par le dispositif de contrôle 14. Cette procédure a une application privilégiée lorsque le terminal 11 est enregistré auprès du cœur de réseau 10 (et plus précisément de l'entité de gestion de la mobilité 17), mais se trouve dans un état de connectivité IP inactif, en d'autres termes, qu'il n'est pas connecté à une station de base du réseau d'accès.

Dans le mode de réalisation décrit ici, comme mentionné précédemment, dans un tel contexte, il n'existe aucune entrée dans les tables de flux FTAB16 et FTAB15 maintenues respectivement par les commutateurs 16 et le routeur 15 associée à l'adresse IP du terminal 11 (on suppose en effet ici que les entrées correspondantes ont été effacées par le dispositif de contrôle 14 dès lors qu'un état inactif du terminal 11 a été reporté par l'entité de gestion de la mobilité 17 au dispositif de contrôle 14).

De ce fait, sur réception par le routeur 15 d'un paquet de données IP entrant en provenance du réseau externe PDN 12 et destiné au terminal 11 (i.e. ayant dans son entête l'adresse IP du terminal 11 comme adresse IP destinatatire) (étape G10), celui ne peut déterminer à partir de sa table de flux FTAB15 vers quel commutateur 16 du cœur de réseau 10 transférer ce paquet.

En l'absence d'entrée dans sa table de flux FTAB15 associée à l'adresse IP du terminal 11, le routeur 15 stocke le paquet entrant dans un buffer et interroge le dispositif de contrôle 14 à l'aide d'un message Packet-In conforme au protocole OpenFlow^{™} (étape G20).

Le dispositif de contrôle 14 envoie alors un message à l'entité de gestion de la mobilité 17 l'informant de la réception de données par un routeur du cœur de réseau 10, d'un paquet à destination du terminal 11 (étape G30). Ce message contient ici l'adresse IP du terminal 11 ainsi que son identifiant IMSI, précédemment mémorisé par le dispositif de contrôle 14.

L'entité de gestion de la mobilité 17 accuse réception de ce message (étape G40) puis déclenche une procédure de recherche du terminal 11 connue en soi, en envoyant aux stations de base du réseau d'accès susceptibles de servir le terminal 11 (typiquement ici à la station de base 13A), une requête dite de paging ou « paging request » (étape G50). Cette requête est relayée par les stations de base et en particulier par la station de base 13A (étape G60). Cette procédure est identique à la procédure de paging rappelée dans le document 3GPP TS 23.401, section 5.3.4.3.

Sur réception de cette requête de paging, le terminal 11 initie une procédure de requête de service désignée par « UE triggered Service Request procédure » identique à la procédure décrite dans le document 3GPP TS 23.401, section 5.3.4.1, de sorte à établir une connexion avec la station de base 13A (étape G70). Cette procédure fait intervenir des étapes similaires à l'étape E30 puis les étapes E80 à E120 décrites précédemment en référence à la figure 6.

Une fois la connexion établie avec la station de base 13A, le terminal 11 est dans un état « EMM-Registered » et « ECM-Connected », c'est-à-dire enregistré auprès du cœur de réseau 10 et connecté à une station de base d'un réseau d'accès (en l'occurrence à la station de base 13A).

L'entité de gestion de la mobilité 17 détermine que le terminal 11 se trouve dans un tel état et informe le dispositif de contrôle 14 de cet état en lui envoyant un message « UE State Disclose » contenant l'information d'état « EMM-Registered », l'information d'état « ECM-Connected », l'adresse IPv6 du terminal 11, son identifiant IMSI ainsi l'adresse IP de la station de base 13A à laquelle le terminal 11 est connecté (étape G80).

Le dispositif de contrôle 14 met alors à jour les informations de topologie TOPO correspondantes avec la connexion ainsi établie entre le terminal 11 et la station de base 13A (étape G90), comme mentionné précédemment.

Il actualise par ailleurs les règles de traitement devant être appliquées par le routeur 15 et les commutateurs 16 en présence de paquets de données à destination de l'adresse IP du terminal 11.

Plus particulièrement, dans l'exemple envisagé ici, cette actualisation consiste
- à ajouter une nouvelle entrée dans la table FTAB15 du routeur indiquant qu'en présence d'un paquet dont l'entête contient comme adresse IP destinataire, l'adresse IP du terminal 11, ce paquet doit être transféré vers le commutateur 16A connecté à la station de base 13A ; et
- à ajouter une nouvelle entrée dans la table FTAB16 du commutateur 16A indiquant qu'en présence d'un paquet dont l'entête contient comme adresse IP destinataire, l'adresse IP du terminal 11, ce paquet doit être transféré vers la station de base 13A.

Suite à cette actualisation, le routeur 15 transfère le paquet de données entrant vers le commutateur 16A désigné dans sa table FTAB15, qui à son tour transfère ce paquet vers la station de base 13A qui le transmet au terminal 11.

Le dispositif de contrôle 14 répond à l'entité de gestion de la mobilité 17 en lui envoyant un message « UE State Disclose Ack » (étape G100).

Dès lors, des flux de données en liaison descendante (étape G110) peuvent s'échanger entre le réseau externe 12 et le terminal 11 via le cœur de réseau 10.

Dans le mode de réalisation décrit ici, on a considéré qu'un paquet ou un flux de données est identifié par l'adresse IP de son destinataire ou de sa source. Bien entendu, cette hypothèse n'est pas limitative en soi et d'autres champs de l'entête du paquet de données IP ou du flux peuvent être pris en considération pour identifier un flux et le transférer conformément à l'invention.

En outre, dans le mode de réalisation décrit ici, on a considéré des connexions quasi statiques entre les routeurs 15, les commutateurs 16 et les stations de base 13. Toutefois, dans un autre mode de réalisation, on peut envisager que le dispositif de contrôle 14 mettent également à jour ces connexions en fonction de divers critères, comme par exemple la charge de ces équipements et/ou les conditions de trafic, et les répercutent dans des règles de traitement appropriées. Par exemple, le dispositif de contrôle 14 peut être en mesure de choisir ou de changer le routeur utilisé. Dans un autre mode de réalisation, le dispositif de contrôle peut contrôler les éléments du réseau de transport sur lequel sont interconnectés les commutateurs et les routeurs, de façon à adapter plus finement les chemins empruntés par les différents flux, en fonction de critères de QoS, de résilience ou de sécurité, etc.

## Revendications

1. Cœur de réseau IP (10) comprenant :
- au moins un routeur (15) vers un réseau de paquets de données externe et au moins un commutateur (16) connecté audit au moins un routeur (15), ledit au moins un commutateur (16) étant configuré à échanger avec ledit routeur des paquets de données IP sans établir de tunnel GTP, ledit au moins commutateur étant connecté à au moins une station de base (13) d'un réseau d'accès et configuré à échanger avec ladite station de base des paquets de données IP non encapsulé selon le protocole GTP;
- un dispositif de contrôle (14) apte à commander ledit au moins un routeur (15) et ledit au moins un commutateur (16) ; et
- une entité de gestion de la mobilité (17) connectée d'une part au moyen d'une interface de communication avec le dispositif de contrôle (14) et d'autre part à ladite au moins une station de base (13), ladite entité de gestion de la mobilité étant configurée à recevoir en provenance de ladite station de base un message relatif à un terminal et à transmettre audit dispositif de contrôle une information d'état représentative d'un état de mobilité et/ou de connectivité IP dudit terminal dérivée du message; ledit dispositif de contrôle comprenant :
- un module de communication (14B) avec ladite entité de gestion de la mobilité (17) du cœur de réseau IP, apte à recevoir en provenance de ladite entité ladite information
d'état représentative d'un état de mobilité et/ou de connectivité IP dudit terminal;
- un module de maintien à jour (14C) d'informations de topologie (TOPO) représentant des connexions existant entre ledit au moins un routeur (15), ledit au moins un commutateur (16), ladite au moins une station de base et des terminaux enregistrés auprès du cœur de réseau, ledit module étant apte à mettre à jour au moins une partie desdites informations de topologie en fonction de ladite information d'état ; et
- un module de commande (14A) dudit au moins un routeur (15) et dudit au moins un commutateur (16), configuré pour définir et actualiser des règles de traitement destinées à être appliquées à des flux de données à destination desdits terminaux enregistrés auprès du cœur de réseau, lesdites règles de traitement étant définies à partir desdites informations de topologie maintenues à jour, ledit dispositif de contrôle (14) étant configuré pour transmettre lesdites règles de traitement audit au moins un routeur (15) et/ou audit au moins un commutateur (16).

2. Cœur de réseau IP selon la revendication 1 dans lequel ledit module de commande est apte à ajouter, modifier et/ou supprimer au moins une entrée d'une table de flux stockée par ledit au moins un routeur (15) et/ou ledit au moins un commutateur (16) reflétant une des règles de traitement.

3. Cœur de réseau IP selon l'une des revendications précédentes dans lequel le module de commande est configuré pour communiquer avec ledit au moins un routeur (15) et ledit au moins un commutateur (16) par l'intermédiaire du protocole OpenFlow^{™}.

4. Cœur de réseau IP selon l'une des revendications précédentes dans lequel ladite information d'état reçue de l'entité de gestion de la mobilité (17) est représentative d'au moins un état parmi :
- un état enregistré ou non enregistré auprès du cœur de réseau IP ; et/ou
- un état connecté ou inactif.

5. Cœur de réseau IP selon l'une des revendications précédentes dans lequel ladite information d'état reçue de l'entité de gestion de la mobilité (17) comprend en outre un identifiant de la station de base à laquelle est attachée ledit terminal et/ou un identifiant du terminal.

6. Cœur de réseau IP selon l'une des revendications précédentes dans lequel le dispositif de contrôle envoi à ladite entité de gestion de la mobilité (17) un message l'informant d'une réception par un dit routeur (15) d'un paquet à destination d'un terminal enregistré auprès du cœur de réseau se trouvant dans un état de connectivité IP inactif.

## Patentansprüche

1. IP-Kernnetzwerk (10), das umfasst:
- mindestens einen Router (15) zu einem externen Datenpaketnetz und mindestens einen Switch (16), der mit dem mindestens einen Router (15) verbunden ist, wobei der mindestens eine Switch (16) dazu konfiguriert ist, mit dem Router IP-Datenpakete auszutauschen, ohne GTP-Tunnel aufzubauen, wobei der mindestens eine Switch mit mindestens einer Basisstation (13) eines Zugangsnetzwerks verbunden ist und dazu konfiguriert ist, mit der Basisstation nichtverkapselte IP-Datenpakete nach dem GTP-Protokoll austauschen;
- eine Steuervorrichtung (14), die dazu fähig ist, den mindestens einen Router (15) und den mindestens einen Switch (16) zu steuern; und
- eine Mobilitätsverwaltungseinheit (17), die einerseits über eine Kommunikationsschnittstelle mit der Steuervorrichtung (14) und andererseits mit der mindestens einen Basisstation (13) verbunden ist, wobei die Mobilitätsverwaltungseinheit dazu konfiguriert ist, von der Basisstation eine Nachricht in Bezug auf ein Endgerät zu erhalten und an die Steuervorrichtung eine aus der Nachricht abgeleitete Zustandsinformation zu senden, die für einen Mobilitäts- und/oder IP-Konnektivitätszustand des Endgeräts repräsentativ ist;
wobei die Steuervorrichtung umfasst:
- ein Kommunikationsmodul (14B) mit der Mobilitätsverwaltungseinheit (17) des IP-Kernnetzwerks, das dazu fähig ist, von der Einheit die Zustandsinformation zu empfangen, die für einen Mobilitäts- und/oder IP-Konnektivitätszustand des Endgeräts repräsentativ ist;
- ein Modul zur Aktualisierung (14C) von Topologieinformationen (TOPO), die bestehende Verbindungen zwischen dem mindestens einen Router (15), dem mindestens einen Switch (16), der mindestens einen Basisstation und im Kernnetzwerk registrierten Endgeräten darstellen, wobei das Modul dazu fähig ist, mindestens einen Teil der Topologieinformationen in Abhängigkeit von der Zustandsinformation zu aktualisierten; und
- ein Steuermodul (14A) des mindestens einen Routers (15) und des mindestens einen Switches (16), das dazu konfiguriert ist, die Verarbeitungsregeln, die zur Anwendung auf Datenflüsse zu den beim Kernnetzwerk registrierten Endgeräten bestimmt sind, zu definieren und zu aktualisieren, wobei die Verarbeitungsregeln auf Grundlage der aktualisierten Topologieinformationen definiert werden,
wobei die Steuervorrichtung (14) dazu konfiguriert ist, die Verarbeitungsregeln an den mindestens einen Router (15) und/oder den mindestens einen Switch (16) zu senden.

2. IP-Kernnetzwerk nach Anspruch 1, wobei das Steuermodul dazu fähig ist, mindestens einen Eintrag einer von dem mindestens einen Router (15) und/oder dem mindestens einen Switch (16) gespeicherten Flusstabelle, der eine der Verarbeitungsregeln wiedergibt, zu ändern.

3. IP-Kernnetzwerk nach einem der vorhergehenden Ansprüche, wobei das Steuermodul dazu konfiguriert ist, mit dem mindestens einen Router (15) und dem mindestens einen Switch (16) mithilfe des Protokolls OpenFlow^{™} zu kommunizieren.

4. IP-Kernnetzwerk nach einem der vorhergehenden Ansprüche, wobei die von der Mobilitätsverwaltungseinheit (17) empfangene Zustandsinformation repräsentativ ist für mindestens einen Zustand von:
- einem bei dem IP-Kernnetzwerk registrierten oder nichtregistrierten Zustand; und/oder
- einem verbundenen oder inaktiven Zustand.

5. IP-Kernnetzwerk nach einem der vorhergehenden Ansprüche, wobei die von der Mobilitätsverwaltungseinheit (17) empfangene Zustandsinformation außerdem eine Kennung der Basisstation, an die das Endgerät angebunden ist, und/oder eine Kennung des Endgeräts umfasst.

6. IP-Kernnetzwerk nach einem der vorhergehenden Ansprüche, wobei die Steuervorrichtung an die Mobilitätsverwaltungseinheit (17) eine Nachricht sendet, die sie über den Empfang eines Pakets an ein beim Kernnetzwerk registriertes Endgerät durch einen besagten Router (15) informiert, das sich in einem inaktiven IP-Konnektivitätszustand befindet.

## Claims

1. IP core network (10) comprising:
- at least one router (15) to an external data packet network and at least one switch (16) connected to said at least one router (15), said at least one switch (16) being configured to exchange with said router IP data packets without establishing a GTP tunnel, said at least one switch being connected to at least one base station (13) of an access network and configured to exchange with said base station non-encapsulated IP data packets according to the GTP protocol;
- a control device (14) capable of controlling said at least one router (15) and said at least one switch (16); and
- a mobility management entity (17) connected on the one hand by means of a communication interface with the control device (14) and on the other hand to said at least one base station (13), said mobility management entity being configured to receive from said base station a message relating to a terminal and to transmit to said control device status information representative of a mobility and/or IP connectivity state of said terminal derived from the message;
said control device comprising:
- a communication module (14B) for communicating with said mobility management entity (17) of the IP core network, capable of receiving from said entity status information representative of a mobility and/or IP connectivity state of said terminal;
- a module (14C) for keeping up to date topology information (TOPO) representing connections that exist between said at least one router (15), said at least one switch (16), said at least one base station and terminals registered with the core network, said module being capable of updating at least a part of said topology information as a function of said status information; and
- a control module (14A) of said at least one router (15) and of said at least one switch (16), configured to define and update processing rules intended to be applied to data streams intended for said terminals registered with the core network, said processing rules being defined on the basis of said topology information kept up to date,
said control device (14) being configured to transmit said processing rules to said at least one router (15) and/or to said at least one switch (16).

2. IP core network according to Claim 1, wherein said control module is capable of adding, modifying and/or deleting at least one entry of a stream table stored by said at least one router (15) and/or said at least one switch (16) reflecting one of the processing rules.

3. IP core network according to either of the preceding claims, wherein the control module is configured to communicate with said at least one router (15) and said at least one switch (16) via the OpenFlow^{™} protocol.

4. IP core network according to one of the preceding claims, wherein said status information received from the mobility management entity (17) is representative of at least one state out of:
- a registered or unregistered state with respect to the IP core network; and/or
- a connected or inactive state.

5. IP core network according to one of the preceding claims, wherein said status information received from the mobility management entity (17) further comprises an identifier of the base station to which said terminal is attached and/or an identifier of the terminal.

6. IP core network according to one of the preceding claims, wherein the control device sends to said mobility management entity (17) a message informing it of reception by a said router (15) of a packet intended for a terminal registered with the core network that is in an inactive IP connectivity state.
